# EUROPEAN PATENT SPECIFICATION

(11) **EP 2 118 544 B1**
(45) Date of publication and mention of the grant of the patent: **18.08.2010**
(21) Application number: 08727387.6
(22) Date of filing: 07.01.2008
(51) Int. Cl.: F16K 37/00

(54) **FLUID REGULATORY SYSTEM AND PROCESS**
FLÜSSIGKEITSREGELUNGSSYSTEM UND VERFAHREN
SYSTÈME ET PROCÉDÉ DE RÉGULATION DE FLUIDES

(30) Priority: 09.01.2007 US 621502
(43) Date of publication of application: 18.11.2009
(73) Proprietor: Dresser, Inc., Addison, Texas 75001 (US)
(72) Inventor: ESPOSITO, Sandro, Bridgewater, Massachusetts 02324 (US)
(74) Representative: Peterreins, Frank
(86) International application number: PCT/US2008/050411
(87) International publication number: WO 2008/086289

(56) References cited:
- EP-A- 0 660 017
- WO-A-99/17042

## Description

### REFERENCE TO RELATED APPLICATIONS

The present application claims the benefit of priority to U.S. Patent Application No. 11/621,502 which was filed on January 9, 2007.

### TECHNICAL FIELD

This invention relates to regulating fluid flow, and more particularly to safety control fluid regulatory systems and processes.

### BACKGROUND

Control valves are used to regulate fluid flow in a wide variety of commercial and industrial systems. Today, many control valves include and/or are controlled by automated positioners, which have the ability to adjust a valve to control fluid flow for a process. Some industrial and commercial applications, such as certain chemical and nuclear applications, require use of safety control valves that meet business, industry, and/or governmental standards. Safety control valves may be periodically tested to ensure compliance. For example, a partial stroke test of the safety control valve may be performed.

It is also known from document WO 99/17042 a system for running a diagnostic test on a valve having a movable valve member. The system disconnects a control signal and forces the valve to perform a predetermined set of operations. Furthermore, it is known from document EP 0660017 a control system for a valve actuator using a physical model of the actuator for controlling the position of a valving member.

### SUMMARY

A fluid regulatory system may control fluid flow (*e*.*g*., in a conduit or a tank). The fluid regulatory system of the invention includes a valve positioning system. A valve positioning system includes an electric-to-pressure converter and a controller. A controller controls the electric-to-pressure converter in response to a command signal in a signal range, adjust a control signal to the electric-to-pressure converter based at least in part on signals received, and monitor one or more fluid regulatory system components while receiving the low signal. The signal range includes signals from a low signal to a high signal, where the low signal corresponds to a signal for closing a valve. The fluid regulatory system has a probability of failure on demand of 10⁻³ or less.

In some implementations, the command signals may include current signals, such as current signals in the signal range of approximately 4 to approximately 20 mA. The controller may also determine valve characteristics and/or receive command signals over one wire. The fluid regulatory system may be Safety integrated Level 3 compliant.

In some implementations, the valve positioning system may include an override device to interrupt the control signal while supplying power to the controller. The controller may also generate a control signal to close a valve when a low command signal is received.

The controller may retain at least a portion of data received while monitoring one or more of the fluid regulatory system components. The controller may analyze data from monitoring one or more components to determine which data to retain.

A process for fluid regulation according to the invention include receiving a command signal in a signal range, where the signal range includes signals from a low signal to a high signal. The low signal corresponds to a signal for closing a valve. A position of a valve is adjusted at least partially based on the received command signal. Fluid regulatory system components is monitored during closing of the valve. The fluid regulatory system has a probability of failure on demand of less than 10⁻³.

Components may be monitored when receiving the command signal in the signal range and data may be received from sensors coupled to components of the fluid regulatory system. Data received may be analyzed to the data to determine which data to retain. The data received may be analyzed to determine if changes in one or more measured conditions are within an allowable tolerance. In some implementations, data received from sensors may include a first valve position measured at a first time and a second valve position measured at a second time. The first valve position may be compared to the second valve position and one of the first measurement or the second measurement may be retained, if the first valve position and the second valve position are within an allowable tolerance. In some implementations, data received from sensors may include a first pressure delivered to an actuator and a first valve position measured at a first time and a second pressure delivered to an actuator and a second valve position measured at a second time. The first pressure may be compared to the second pressure and the first valve position may be compared to the second valve position. The first measurement and the second measurement may be retained, if the first valve position and the second valve position are within an allowable tolerance and the first pressure and the second pressure are not within an allowable tolerance.

In some implementations, a message may be transmitted indicating the valve has closed when the signal includes a low signal. Valve characteristics may be determined. The command signal may be received over a single wire.

In one aspect, a fluid regulatory system may include a valve, an actuator adapted to receive a pressure signal and adjust a position of the valve in response thereto, and a valve positioning system. The valve positioning system may include an electric-to-pressure converter, a controller, an override device, and a relay. The controller may control the electric-to-pressure converter in response to a command signal in a signal range, where a signal range includes command signals from a low signal to a high signal. A low signal may correspond to a signal for closing a valve. The controller may adjust a control signal to the electric-to-pressure converter based at least in part on the command signals received, generate a close valve signal when a low command signal is received, and monitor one or more system components while receiving the low command signal. The override device may be adapted to interrupt control signals while supplying power to the controller. The relay may receive a pressure signal from the electric-to-pressure converter and deliver the pressure signal to the actuator. The fluid regulatory system may have a probability of failure on demand of 10⁻³ or less.

Various implementations may have one or more features. For example, a valve positioning system may be able to monitor one or more fluid regulatory system components while a valve is closing. Allowing monitoring while the valve is closing may facilitate identification of problems or future problems in the fluid regulatory system. Additionally, the ability to monitor the fluid regulatory system during valve closing may facilitate compliance with government, industry, business, and/or other safety requirements. As another example, a fluid regulatory system may be able to isolate a problem with and/or failure of a component in the system, which may decrease downtime and/or allow more efficient replacement and/or repair of components. As an additional example, a fluid regulatory system may be able to operate using a single wire command signal. Receiving signals over a single wire may decrease interference and simplify installation, manufacture and/or operations of the fluid regulatory system.

The details of one or more implementations are set forth in the accompanying drawings and the description below. Other features will be apparent from the description and drawings, and from the claims.

### DESCRIPTION OF DRAWINGS

FIG. 1 is a block diagram illustrating an example of a fluid regulatory system.
FIG. 2 is a flow chart illustrating an example process performed by a fluid regulatory system.
FIG. 3 is a block diagram illustrating another example of a fluid regulatory system.
FIG. 4 is a flow chart illustrating another example process performed by a fluid regulatory system.
FIG. 5 illustrates a representation of a position over time for a closing valve of an example fluid regulatory system.
FIG. 6 illustrates a representation of partial stroke test of an example fluid regulatory system. Like reference symbols in the various drawings indicate like elements.

### DETAILED DESCRIPTION

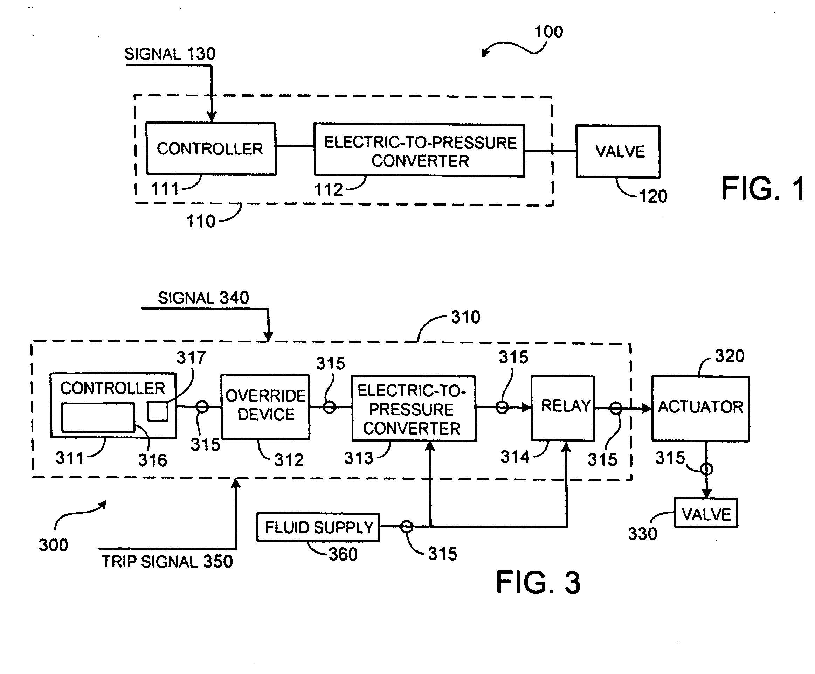

FIG. 1 illustrates an example fluid regulatory system 100. Fluid regulatory system 100 may include any appropriate system capable of affecting fluid flow (*e*.*g*., gas, liquid, or combination thereof). For example, fluid regulatory system 100 may be a safety control valve compliant with business, industry, and/or government standards.

Fluid regulatory system 100 includes a valve positioning system 110 adapted to control a valve 120. Valve positioning system 110 includes components such as a controller 111 and an electric-to-pressure converter (E/P converter) 112, which converts an electrical signal (e.g., control signal) from the controller to a pressure signal of fluid or gas (*e.g.*, air, natural gas, or other appropriate compressible gasses).

Controller 111 may include a programmable logic device, such as a microprocessor, a microcontroller, a field programmable gate array (FPGA), a non-programmable logic device, such as an application specific integrated circuit (ASIC), or any other device for manipulating information in a logical manner. Controller 111 operates, at least in part, in response to command signal 130. Controller 111 may be operable in a signal range. The signal range may be from a high signal to a low signal. For example, controller 111 may be operable in an approximately 4 to approximately 20 mA range. Controller 111 may also operate on a voltage range (*e.g*., 1-24 volts, 12-24 volts, etc.). A low signal may indicate that controller 111 should close valve 120, and a high signal may indicate that the controller should open valve 120. Other arrangements are possible. A low signal or a high signal may be a single value or a range of values. For example, in a 4-20 mA control loop, a low signal may be 3.8-4.2 mA and a high signal may be 19.5-20.7 mA. The control signal for E/P converter 112 may, for example, be 0.1 mA to 1.6 mA current signal.

Valve 120 may be a ball valve, a globe valve, or any other type of fluid affecting device. Valve 120 may include an actuator, where the actuator receives a signal (e.g., a pressure signal) from the valve positioning system 110 and adjusts the position of the valve. In some implementations, the actuator may be positioned outside valve 120 or be a component of the valve positioning system 110.

Controller 111 may open valve 120, gradually or step-wise, as the value of command signal 130 increases from the low value to the high value of the signal range. In some implementations, controller 111 may apply a valve function algorithm to command signal 130 received to determine the degree to which valve 120 should be opened or closed. Although the high signal and the low signal of the signal range are described above in terms of high and low numerical values, a high signal may correlate to a lower numerical value than the low signal (*e.g*., the valve may be closed when the signal delivered is 20 mA and opened when the signal is 4mA).

During one mode of operation, command signal 130 is received by valve positioning system 110 and/or controller 111. The controller may receive command signal 130 over a single wire. A single wire may be used to simplify operations and manufacture and/or reduce interference. In other implementations, a controller may be adapted to receive the signal over two or more wires.

The controller may modify the control signal to the E/P converter 112 based on the command signal 130. E/P converter 112 may then convert the electric control signal received to a pressure signal. The pressure signal may be delivered to an actuator, coupled to or a part of valve 120, which adjusts a position of the valve. For example, if signal 130 is a low signal, then controller 111 may send a command signal to E/P converter 112 for closing valve 120. E/P converter 112 may convert the control signal to a pressure signal, which is delivered to the actuator that closes valve 120.

Controller 111 may monitor components of the fluid regulatory system 100 while closing valve 120. For example, controller 111 may monitor an output pressure signal from E/P converter, a valve position, and/or time. At least a portion of data from monitoring components may be stored (e.g., in a memory of controller 111 or remotely). Controller 111 may analyze the data from monitoring using an algorithm to determine which data to retain. In some implementations, data is transmitted to a system remote from fluid regulatory system 100.

System 100 may have several features. For example, certain applications, such as specific chemical processes or nuclear environments, require use of fluid regulatory systems (e.g., emergency shutdown valves) that meet government, industry, and/or business requirements. Since emergency shutdown valves are not used in day-to-day operations, testing (e.g., partial stroke testing) is performed periodically (e.g., one a month) to ensure operation and/or reduce the risk of failure of the system. For example, valves may stick after prolonged periods of inactivity. A full stroke test may be performed of the fluid regulatory system to ensure operation and/or reduce the risk of failure; however, the fluid regulatory system must be taken off-line or operations must be shut down to perform a full stroke test. Currently used methods monitor components for at most a portion of the open/close operation (e.g., 100%-20% open) since the signal to the controller is terminated when the valve is closed (e.g., during normal operations, testing, and/or emergency shut down) and monitoring can not continue without power. Unlike current techniques, using a low signal to close a valve, such as an emergency shut down valve, allows monitoring of components to continue during closing. Monitoring the components while closing may provide an indication of the operation and/or health of the fluid regulatory system (e.g., valve, actuator, and/or valve positioning system) during the full open/close operation of a valve.

In addition, monitoring components while closing may facilitate identification of problems or potential problems with components (e.g., excess friction in valve stem, debris in the actuator, leaks in couplings or lines, etc.). Identification of problems and potential problems may decrease down-time of operations and improve safety.

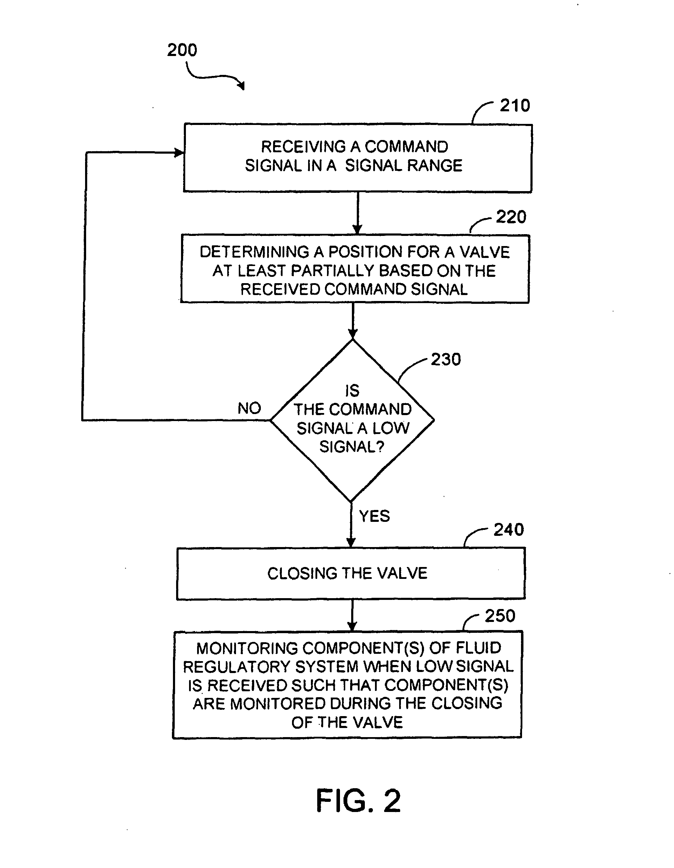

FIG. 2 illustrates an example process 200 of a fluid regulatory system. Process 200 may be implemented using the fluid regulatory system 100 illustrated in FIG. 1. In process 200, a command signal in the signal range is received (operation 210). For example, controller 111 of fluid regulatory system 100 may receive signal 130.

A position for the controlled valve may be determined at least partially based on the received signal (operation 220). For example, controller 111 may determine the position at which valve 120 should be located based on signal 130. Controller 111 may then send a control signal to E/P converter 112 based on the determined position. The E/P converter 112 may convert the electric control signal to a pressure signal and deliver the pressure signal to valve 120 or an actuator of the valve to adjust the position of the valve.

A determination may be made whether the command signal is a low signal (operation 230). For example, a low signal may correspond to 4 mA signal in a 4 to 20 mA current loop or signal range.

If a low signal is received, the valve may be closed (operation 240). For example, if signal 130 is a low signal (*e.g*., 4 mA in a 4-20mA signal range), then controller 111 may determine that valve 120 should be closed and send a signal to close the valve.

Components of the fluid regulatory system may be monitored when the low signal is received (operation 250). Thus, components may be monitored during closing of the valve and/or while the valve is closed. For example, valve position, pressure signal delivered to the valve, time, and/or electric control signal delivered from the controller may be monitored.

In some implementations, data from monitoring the components may be analyzed. An algorithm may be applied to data to determine which data to retain. Retained data may be analyzed to diagnose problems in the fluid regulatory system.

FIG. 3 illustrates another example fluid regulatory system 300. Fluid regulatory system 300 includes a valve positioning system 310, an actuator 320, and a valve 330. Signal 340 (e.g., command signal) is sent to valve positioning system 310. Signal 340 may be modified by various components (e.g., E/P converter, relay, etc.) of the valve positioning system 310 and delivered to actuator 320 (*e*.*g*., a piston subject to differential pressure) which operates on the valve 330. The position of the valve 330 is adjusted based on signal 340.

Valve positioning system 310 includes components such as a controller 311, an E/P converter 313, and a relay 314. Although an E/P converter is described, other appropriate converters capable of converting signals received from the controller may be used. Relay 314 may transmit and/or amplify signals received. Relay 314 may include, but is not limited to, a spring-diaphragm actuator, a spool valve, or a pneumatic amplifier. (Fluid supply 360 (*e.g.*, air or natural gas) may supply fluid to E/P converter 313 and/or relay 314.

Fluid regulatory system may also include sensors 315 coupled to components and/or to connections between components. Sensors 315 may be any device capable of measuring a signal (e.g., electrical or pressure) or position produced and/or received by the valve positioning system. For example, a sensor may measure parameters such as, but not limited to, pressure, flow rate, electrical current, electrical voltage, and/or a valve position. Sensors 315 may transmit data from monitored components to controller 311.

Valve positioning system 310 also includes an override device 312 (e.g., a safety override circuit or device). Override device 312 may provide safety control features to a fluid regulatory system. For example, if unsafe conditions exist in or affect the fluid regulatory system 310, override device 312 may modify or interrupt a signal provided to or by fluid regulatory system 310 to provide a signal that causes the fluid regulatory system to go to a "safe state" (*e*.*g*., vent fluids to atmosphere, close valves, or any action appropriate for a specific system). As an example, if a process such as a chemical reaction becomes uncontrollable, the override device may interrupt the signal to the E/P converter 313 and cause the fluid regulatory system to go to a safe state (*e*.*g*., closing a feed line to the process). As another example, if a leak of unsafe material is detected, the override device may modify the signal to cause the fluid regulatory system to close a valve upstream of the leak.

Override device 312 may be implemented using digital components, analog components, or a combination thereof. Override device 310 may be any collection of electronic components that can interrupt or modify the communication of a signal to E/P converter 313 without disrupting the ability of the signal to power controller 311 and/or sensors 315. Override device 312 may be located apart from controller 311, such as on a separate printed circuit board, or it may be integrated with the controller.

A trip signal 350 and/or command signal 340 may control operation of override device 312. Trip signal 350 may be regulated by an external control mechanism, which may base determinations on data received from various parts of a regulation process and/or facility. Override device 312 may, for example, be triggered in response to receiving trip signal 350 (*e*.*g*., for testing purposes or to cause a fluid regulatory system to go to a safe state), detecting a change in the state of command signal 340 (such as going from high to low), detecting an interruption in the trip signal or the signal, receiving notice of an unsafe condition, or any of numerous other events which require operating fluid regulatory system in a safe state. When override device 312 receives trip signal 350, the modification performed on command signal 340 or control signal (e.g., from controller 311 to E/P converter 313) may be any suitable modification to cause the E/P converter 313 to perform an action associated with the "safe state" (*e*.*g*., transitioning to a default state, such as closed, or freezing the current state). For example, some E/P converters 313 vent to the atmosphere (*e.g.*, a valve is opened that releases fluids in the fluid regulatory system to the atmosphere) when the control signal is interrupted.

Override device 312, which may be viewed as a safety override circuit in one aspect, may have a variety of configurations. In certain implementations, for example, override device 312 may receive command signal 340 before it is provided to controller 311. Thus, override device 312 may evaluate command signal 340 and determine whether to modify the control signal to E/P converter 313 while still allowing controller 311 to extract power and communications from the command signal. Modifying the control signal may include boosting, attenuating, transforming, interrupting, converting, or otherwise manipulating the control signal to produce a particular response from E/P converter 313. If the command signal does not indicate that a condition is occurring, the control signal output by override device 312 may be essentially the same as one that enters. In some implementations, override device 312 may receive trip signal 350 in addition to or instead of command signal 340. Override device 312 may also evaluate trip signal 350 to determine whether to modify the control signal to E/P converter 313. If E/P converter 313 vents to atmosphere during signal modification, override device 312 may restore the output pressure of E/P converter 313 to atmospheric pressure in response to an activation condition.

To evaluate command signal 340 for modifying control of the E/P converter control signal, override device 312 may, for example, include a transistor coupled to the control signal line and controlled by a comparator. The transistor may be any suitable current- or voltage-controlled electronic component that restricts or allows current flow in response to a signal at a control terminal (discussed here as a comparator). For example, the transistor may be p-type or n-type field effect transistor (FET), such as metal oxide semiconductor FET (MOSFET) that is controlled by a voltage applied to a gate terminal of the MOSFET. The comparator may be any circuitry for comparing a reference input signal to a threshold input signal (e.g., an op-amp) and producing an output to control the transistor in response to the comparison.

In one implementation, override device 312 may receive an input current generated from the command signal. A resistor may be coupled to the negative line of the command signal and placed in parallel with a diode to develop a voltage proportional to the command signal's input current. A resistor may also be coupled to the positive line of the command signal to produce a characteristic voltage drop representative of the command signal's input current. A voltage regulator may work with the second resistor to form a constant reference voltage against which the voltage across the first resistor is compared.

In operation, the comparator performs the comparison of the characteristic voltage representative of the input current to the reference voltage. If the characteristic voltage falls out of range (e.g., below the reference voltage), because the input current is too low or because the voltage regulator has shunted the input current to ground because it was too high, the comparator turns off its respective transistor, thus interrupting current flow to the E/P converter. In particular implementations, the circuitry can be redundantly duplicated to provide added security.

To evaluate the trip signal for modifying the control signal, override device 312 may, for example, include a transistor in the positive path of the control signal. The transistor may be any suitable current- or voltage-controlled electronic component that restricts or allows current flow in response to a signal at a control terminal (discussed here as a voltage regulator). The voltage signal used to control the transistor is the trip signal, stepped down by the voltage regulator to a voltage level appropriate for the transistor. Thus, for example, a 24-V trip signal could be stepped down for 5 V if the transistor was a 5-V MOSFET. The override device may also have a resistor coupled between the positive path of the control signal and the gate line of the transistor to prevent current from the stepped-down trip signal from significantly altering the control signal. For example, the resistor may be selected to have a relatively high resistance value, such as 1 MΩ, to minimize current flow.

In operation, the transistor allows current flow as long as the stepped-down voltage from the trip signal is maintained. When the trip signal is interrupted, the current flow through the transistor is interrupted, thus interrupting the control signal to the E/P converter. In response to the interruption of the control signals, the E/P converter transitions to a safe state, such as venting to the atmosphere. Thus, the override device provides an effective operation for stopping the control signal in response to the trip signal. In particular implementations, the override device 312 may include two duplicate override circuits for increased reliability.

In certain implementations, the features of monitoring the command signal and monitoring the trip signal may be provided in one safety override circuit override device 312 (e.g., on the same circuit board). In application, however, it may be that only one of the safety features is used. Furthermore, although mention has been made of the override device having redundancy through duplicate circuits, it may be advantageous to provide redundancy through non-duplicate circuits, which may reduce the chance of both circuits being affected by the same condition. In certain implementations, however, redundancy is not required.

Controller 311 may include an algorithm 317 to apply to data to determine which data to store and a memory 316 to store data and/or other instructions. Memory 316 of controller 311 may include volatile or nonvolatile memory such as, RAM, ROM, optical memory, magnetic memory, flash memory, electrically-erasable, programmable ROM (EEPROM), phase-change RAM (PRAM), ferroelectric RAM (FeRAM), or any other appropriate device for storing information. At least a portion of memory 316 may be nonvolatile so that power interruptions do not affect the storage of data.

Command signals 340 are sent to controller 311. In some implementations, signals may be delivered to controller 311 over one wire. Utilizing one wire may simplify operations and/or reduce interference. Controller 311, which is powered by signal 340, generates an appropriate control signal to transmit to E/P converter 313 based at least partially on the command signal. The control signal is provided to override device 312, which provides the control signal to E/P converter 313. E/P converter 313 converts the electric control signal to a pressure signal for delivery to relay 315, which may modify or maintain the pressure signal. The pressure signal is then transmitted to actuator 320, which adjusts the position of valve 330 based on the pressure signal.

During one mode of operation of the fluid regulatory system 300, signal 340 is transmitted to override device 312 of valve positioning system 310. Override device 312 determines whether the control signal should be modified or interrupted (e.g., due to conditions that require the fluid regulatory system to go to a safe state). If override device 312 determines that the control signal does not need to be modified or interrupted, the signal is transmitted to E/P converter 313.

If override device 312 determines that the control signal should be interrupted, the control signal to E/P converter 313 is terminated while power is maintained to controller 311. Termination of the control signal to the E/P converter allows the fluid regulatory system to go to a safe state (*e.g*., close valve 330). Since power is maintained to controller 311, and/or sensors 315, if required, components of the fluid regulatory system may be monitored.

Override device 312 may determine that control signal should be modified or interrupted for a variety of reasons, such as the detection of an unsafe condition in or affecting the fluid regulatory system. For example, if values measured by sensors 315 exceed a safe range, controller 311 may transmit a message to override device 312 indicating the unsafe conditions. As another example, if an unsafe condition is detected (*e.g*., out of range command signal 340, position, temperature, reference voltage, and/or pressure values; memory 316 faults; degradation of E/P converter 313; and/or degradation of relay responsiveness during one or more checks), override device 312 may interrupt the control signals output by the controller 311.

In some implementations, fault identification and analysis may be conducted via other communication devices such as a HART (Highway Addressable Remote Transducer) modem. Controller 311 may include a HART modem to receive messages, such as commands, communicated in the command signal 340 or control signal. The HART modem allows sensors, transducers, controllers, and other devices to communicate in a network over a signal range, such as a 4-20 mA current loop connection. The HART modem may modulate the signal (*e.g*., create a 1200 baud FSK signal) in the loop that enables communication with the controller 311. Thus, the HART modem may transmit commands to controller 311, which may store the commands in memory such as EEPROM or flash memory.

In some implementations, a valve positioning system including controller 311, override device 312, and/or other component(s) may be positioned in a housing. The housing may at least partially enclose at least one of the components and the controller. The housing may be weather resistant, explosion resistant and/or proof, and/or meet government and/or industry standards. Positioning the controller, override device, and/or other components in the housing may facilitate installation of the valve positioning system and/or prevent damage to components and/or controllers.

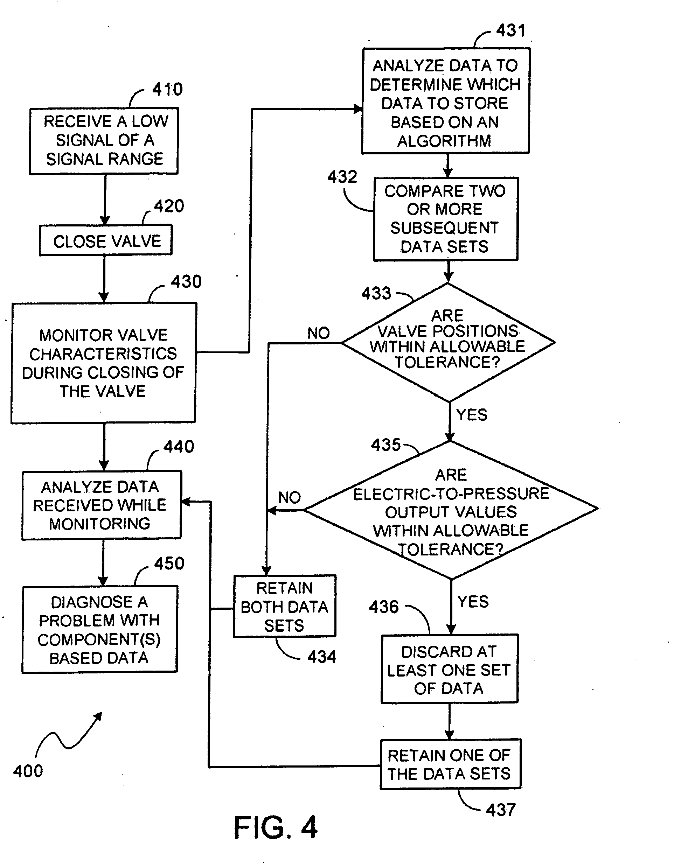

FIG. 4 illustrates an example process 400 for a fluid regulatory system. Process 400 may, for example, be implemented by the fluid regulatory system 300 illustrated in FIG. 3. A low signal of signal range may be received (operation 410). For example, override device 312 and/or controller 311 may receive the low signal 340. The valve may be closed (operation 420). For example, controller 311 modifies low signal 340 and transmits a command signal to override device 312. Override device 312 transmits the command signal to E/P converter 313, which converts the electric signal to a pressure signal to be transmitted to actuator 320 that adjusts the valve position of valve 330.

Valve components are monitored during valve closing and/or while the valve is closed (operation 430). For example, valve characteristics such as time, E/P output, and/or valve position may be monitored. Since power is supplied to the controller when a low signal is received, monitoring may be performed while closing the valve. Other valve characteristics such as temperature and/or input/output signals to various components may also be monitored. In some implementations, components may be continuously and/or periodically monitored when a signal in the signal range is received, which may increase accuracy in valve operations and/or greater predictability of failure on demand of components of the valve positioning system.

Data may be analyzed to determine which data to store based on an algorithm (operation 431). For example, algorithm 317 may be stored in a memory 316 of controller 311. Controller 311 may analyze data from sensors 315 in the fluid regulatory system 300 according to algorithm 317.

The algorithm may process the data by comparing two or more subsequent (*e.g*., in time) data sets (operation 432). For example, a data set from sensors at a first time may be compared to a data set from sensors at a second time that is 0.5 ms after the first time. A determination may be made whether the valve positions in the first set of data and the second set of data are within an allowable tolerance (*e*.*g*., 0.1%) (operation 433). If the valve positions are not within an allowable tolerance, the two data sets are retained (operation 434). If the valve positions are within an allowable tolerance, then a determination is made whether the E/P output values are within an allowable tolerance (operation 435). The allowable tolerance for the valve positions may be similar or different from the allowable tolerance of the E/P output values. For example, if the E/P output values are not within an allowable tolerance then both data sets are retained (operation 434). If the E/P output values are within an allowable tolerance, then at least one of the data sets may be discarded (*e*.*g*., not stored) (operation 436), and one of the data sets may be retained (operation 437). The data sets may be retained, for example, by storing data in memory 316, such as an EEPROM or flash memory, of controller 311. As another example, data may be retained by transmitting the data to a remote system or repository. Discarding some of the data sets may facilitate analysis by reducing points which may be extraneous or repetitive.

Although the algorithm 317 is described above in terms of valve position and pressure, the algorithm may be applied to other measurements of components obtained, as appropriate. In other implementations, the data from monitoring components may be stored and an algorithm to determine which data to store may not be applied. In some implementations, the algorithm may be applied to determine which data to transmit from the fluid regulatory system (e.g., to an operator or remote system).

The data may be analyzed while monitoring the fluid regulatory system (operation 440). For example, various analysis such as comparing input/output curves, F-test, Fourier transforms, etc., may be performed on the data. As another example, trending analysis may be performed on the data from monitoring components. A problem with component(s) may be diagnosed based on the data (operation 450). For example, data may be analyzed to determine if friction has increased in the valve or a leak exists in a connection between components of the fluid regulatory system. As another example, problems such as plugging in electrical to pressure output converters, deposits on electrical to pressure output converter flexures or nozzles, failure of controller electronics, performance shift of controller electronics, failure or leak in a relay (*e.g*., failure or leak in a diaphragm of a relay), gas leaks in tubing connections (*e*.*g*., to an actuator, a relay, or an electrical to pressure output converter), broken actuator springs, increased packing friction, low pressure gas stream delivery from gas supply, and/or temperature outside a predetermined range (*e*.*g*., high temperatures may cause failure in a few days)) may be diagnosed.

Several implementations for fluid regulation have been described, and a number of others have been mentioned or suggested. Nevertheless, it will be understood that various modifications may be made. Various operations may be added, deleted, modified, or reordered. For example, a different algorithm than the one described or a variation thereof may be utilized to determine which data to store. In addition, the algorithm 317 may be applied to measurements other than valve position and pressure obtained during closing, while the valve is closed, or while receiving a signal in the signal range. As another example, problems with components of the fluid regulatory system may not be determined. In addition, data sets may be transmitted to a memory remote from the valve positioning system. As another example, data sets may not be stored. Furthermore, components of the fluid regulatory system may be monitored while receiving a signal in the signal range. Accordingly, other implementations are within the scope of this application.

In some implementations, valve characteristics may be determined and/or analyzed based on the data. For example, a valve position versus time curve may be examined to determine if a valve fully closes and how long it takes for the valve to close. Analysis of a comparison of valve position over time may facilitate identification of debris in a valve, excessive friction in a valve, damaged or deteriorating valve pans, and/or other unsafe conditions.

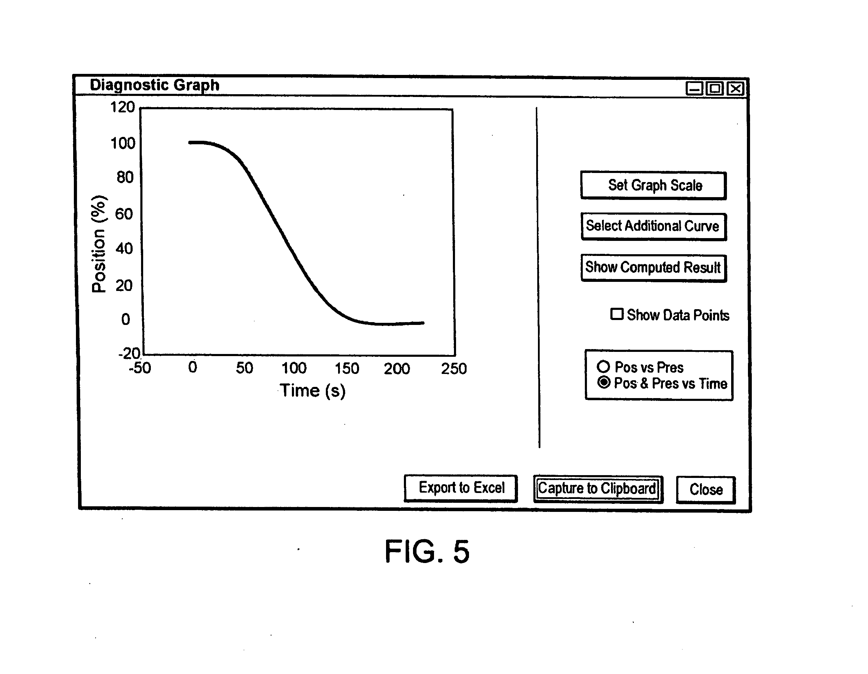

FIG. 5 illustrates a representation of a valve position versus time curve for a valve closing. The data in the valve position versus time curve may be analyzed to diagnose problems with components. As indicated, the valve took approximately 150 seconds to close. If the last closing of the valve took approximately 60 seconds to close, the new time to close valve may indicate a problem in the valve such as excessive friction due to debris in the valve.

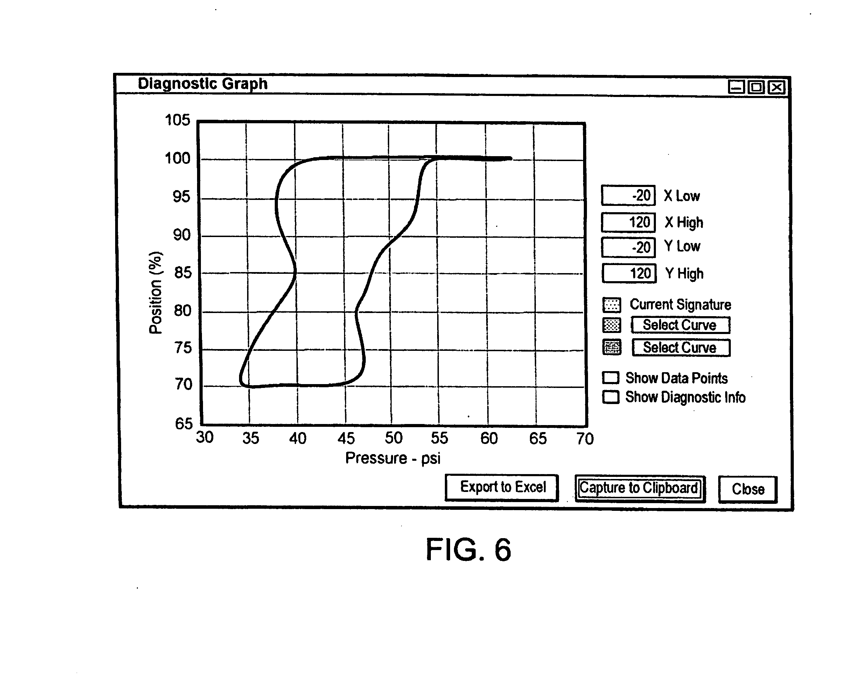

FIG. 6 illustrates a representation of a valve position versus E/P output pressure curve for a partial stroke test of an example fluid regulatory system, such as the system in FIG 3.

Analysis of the comparison of valve position versus E/P output pressure curves for partial and full stroke tests may be compared to determine if variances outside an acceptable tolerance exist. For example, a curve may be superimposed on another curve to detect variations outside an allowable tolerance. Variations in the partial stroke test may indicate problems in the fluid regulatory system (*e*.*g*., debris), the need for a full stroke test, or further testing.

In some implementations, E/P pressure versus time may be analyzed to determine valve characteristics. An analysis of pressure may be examined to determine if choke flow has occurred or debris is present in the fluid regulatory system. Additionally, other valve characteristics may be analyzed to determine if problems exist or may occur in the system.

In certain implementations, a message may be sent (*e*.*g*., to an operator) when an override device interrupts or modifes a signal or when a trip signal is received. A message may notify an operator of data, obtained during valve closing, stored in the memory of the controller. An operator may transfer the data collected in the memory of the controller to another memory external to the fluid regulatory system (*e*.*g*., via bus or network protocols, such as XML messages or Btuctooth). The message may also identify condition(s) of component(s) of the valve (*e*.*g*., impending failure of a component).

In some implementations, a valve positioning system may be used in safety-implemented systems (*e*.*g*., relief valves, rupture disks, and other systems with high reliability standards). Use of valve positioning systems capable of diagnosing problems and/or failures prior to the problem or failure occurring may meet and facilitate compliance with regulations of safety implemented systems (*e*.*g*., government, industry, and/or business safety standards). For example, certain applications such as specific chemical and nuclear processes require the use of valves that comply with stringent safety standards, such as use of devices that have maximum allowable probability of failure on demand values or that meet a specific SIL (Safety Integrity Levels). SIL is a statistical representation of the reliability of a safety instrumented system (SIS) when a process demand occurs. A higher SIL corresponds to a more reliable device (*e*.*g*., SIL 3 devices are more reliable than SIL 2 devices). SILs are correlated to the probability of failure ofdemand (*e*.*g*., probability of unavailability of a system at the time of a process demand).

Some portions of a process of an industry may require SIL-3 devices or devices that have a probability of failure on demand of less than 10⁻³. Some implementations of fluid regulatory system and/or valve positioning system are at least SIL-3 and/or have a probability of failure on demand of less than 10⁻³.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementations in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the term "machine-readable medium" refers to any computer program product, apparatus and/or device (*e*.*g*.. magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer (*e*.*g*., host or external host) having a display device (*e*.*g*., a CRT (cathode ray tube) or LCD (liquid crystal display) monitor) for displaying information to the user and a keyboard and a pointing device (*e*.*g*., a mouse or a trackball) by which the user can provide input to the computer. Other kinds of devices can be used to interact with a user as well. For example, feedback provided to the user by an output device may be any form of sensory feedback (*e*.*g*., visual feedback, auditory feedback, and/or tactile feedback) and/or input from the user may be received in any form, including acoustic, speech, or tactile input.

Several implementations for regulating fluid flow have been described, and a number of others have been mentioned or suggested. Furthermore, those skilled in the art will readily recognize that a variety of modifications, substitutions, deletions, and/or additions may be made to these implementations while still achieving fluid control. The scope of the protected subject matter therefore is to be determined on the basis of the following claims, which may encompass one or more aspects of one or more of the implementations.

It is to be understood the implementations are not limited to particular systems or processes described, which may, of course, vary. It is also to be understood that the terminology used herein is for the purpose of describing particular implementations only, and is not intended to be limiting. As used in this specification, the singular forms "a", "an" and "the" include plural referents unless the content clearly indicates otherwise. Thus, for example, reference to "a relay" includes a combination of two or more relays and reference to "a gas" includes mixtures of different types of gases.

## Claims

1. A fluid regulatory system (100; 300) comprising:
a valve positioning system (110; 310) including:
an electric-to-pressure converter (112; 313); and
a controller (111; 311), **characterized in that** the controller (111;311) is adapted to:
control the electric-to-pressure converter (112; 313) in response to a command signal (130; 340) in a signal range, wherein the signal range comprises command signals from a low signal to a high signal, and wherein the low signal corresponds to a signal for closing a valve (120; 330);
adjust a control signal to the electric-to-pressure converter (112; 313) based at least in part on command signals (130; 340) received; and
monitor one or more fluid regulatory system components while receiving the low command signal;
wherein the fluid regulatory system (100; 300) has a probability of failure on demand of 10-3 or less.

2. The fluid regulatory system of claim 1 wherein command signals (130; 340) include current signals.

3. The fluid regulatory system of claim 2 wherein the signal range is approximately 4 to approximately 20 mA.

4. The fluid regulatory system of claim 1 wherein the controller (111; 311) is adapted to:
determine valve characteristics; or
receive command signals (130; 340) over one wire; or
generate a control signal to close a valve (120) when the low command signal is received; or
store at least a portion of data received while monitoring one or more of the fluid regulatory system components; or
analyze data from the monitoring of one or more of the fluid regulatory system components to determine which data to retain.

5. The fluid regulatory system of claim 1 wherein the fluid regulatory system (100; 300) is Safety Integrated Level 3 compliant; or
wherein the fluid regulatory system (100; 300) further comprises an override device (312) adapted to interrupt the control signal while supplying power to the controller (311).

6. A method performed by a fluid regulatory system (100), **characterized by** the fact that the method comprises:
receiving (210; 410) a command signal (130; 340) in a signal range, wherein the signal range comprises signals from a low signal to a high signal, and wherein the low signal corresponds to a signal for closing a valve (120; 330);
adjusting a control signal for an electric-to-pressure converter (112; 313) at least partially based on the received command signal (130; 340); and
monitoring (250; 430) one or more components of the fluid regulatory system when the low signal is received such that one or more of the system components are monitored (430) during closing of the valve (120; 330);
wherein the fluid regulatory system (100; 300) has a probability of failure on demand of less than 10-3.

7. The method of claim 6 further comprising monitoring (250; 430) one or more of the components when receiving the command signal (130; 340).

8. The method of claim 7 wherein monitoring (250; 430) one or more of the components comprises receiving data from sensors (315) coupled to components of the fluid regulatory system.

9. The method of claim 8 further comprising analyzing (431) the data received to determine which data to retain.

10. The method of claim 9 wherein analyzing (431) the data to determine which data to retain comprises determining (432, 433, 435) if changes in one or more measured conditions are within an allowable tolerance.

11. The method of claim 9 further comprising storing (434, 437) the data to be retained.

12. The method of claim 10 wherein the data includes:
a first valve position measured at a first time;
a second valve position measured at a second time; and
analyzing (431) the data comprises:
comparing (432, 433) the first valve position to the second valve position; and
retaining (437) one of the first measurement or the second measurement, if the first valve position and the second valve position are within an allowable tolerance.

13. The method of claim 10 wherein the data includes:
a first pressure delivered to an actuator and a first valve position measured at a first time;
a second pressure delivered to an actuator and a second valve position measured at a second time; and
analyzing (431) the data comprises:
comparing (432, 433) the first pressure to the second pressure;
comparing (432, 435) the first valve position to the second valve position; and
retaining (437) the first measurement and the second measurement, if the first valve position and the second valve position are within an allowable tolerance and the first pressure and the second pressure are not within an allowable tolerance.

14. The method of claim 6 further comprising
closing (240; 420) the valve (120; 330) when the low signal is received (210; 410); or
transmitting a message indicating the valve (120; 330) has closed when the signal includes a low signal; or
determining (430) valve characteristics.

15. The method of claim 6 wherein receiving the command signal (130; 340) comprises receiving the command signal over a single wire.

16. A fluid regulatory system according to claim 1, comprising:
a valve (330); and
an actuator (320) adapted to receive a pressure signal and adjust a position of the valve (330) in response thereto;
the valve positioning system (310) further including:
an override device (315) adapted to interrupt control signals while supplying power to the controller (317); and
a relay (314) adapted to receive the pressure signal from the electric-to-pressure converter and deliver the pressure signal to the actuator;
wherein the controller (311) of the valve positioning system (310) is further adapted to generate a close valve signal when a low command signal is received; and
wherein the fluid regulatory system (300) has a probability of failure on demand of 10-3 or less.

## Patentansprüche

1. Fluidregulierungssystem (100; 300), umfassend:
ein Ventilpositioniersystem (110; 310), beinhaltend:
einen elektrisch-zu-Druckwandler (112; 313) und
eine Steuerung (111; 311), **gekennzeichnet dadurch, dass** die Steuerung (111; 311) ausgelegt ist zum:
Steuern des elektrisch-zu-Druckwandlers (112; 313) in Reaktion auf ein Befehlssignal (130; 340) in einen Signalbereich, wobei der Signalbereich Befehlssignale von einem Tiefpegel-Signal zu einem Hochpegel-Signal umfasst, und wobei das Tiefpegel-Signal einem Signal zum Schließen eines Ventils (120; 330) entspricht;
Einstellen eines Steuersignals zu dem elektrisch-zu-Druckwandler (112; 313), basierend zumindest zum Teil auf empfangenen Befehlssignalen (130; 340); und
Überwachen einer oder mehrerer Fluidregulierungssystemkomponenten, während des Empfangens des Tiefpegel-Steuersignals;
wobei das Fluidregulierungssystem (100; 300) eine Ausfallwahrscheinlichkeit bei Bedarf von 10-3 oder weniger hat.

2. Fluidregulierungssystem gemäß Anspruch 1, wobei Befehlssignale (130; 340) Stromsignale beinhalten.

3. Fluidregulierungssystem gemäß Anspruch 2, wobei der Signalbereich ungefähr 4 bis ungefähr 20 mA beträgt.

4. Fluidregulierungssystem gemäß Anspruch 1, wobei die Steuerung (111; 311) ausgelegt ist zum:
Bestimmen von Ventilkenngrößen; oder
Empfangen von Befehlssignalen (130; 340) über eine Leitung; oder
Erzeugen eines Steuersignals, um ein Ventil (120) zu schließen, wenn das Tiefpegel-Steuersignal empfangen wird; oder
Speichern zumindest eines Teils von empfangenen Daten, während des Überwachens einer oder mehrerer der Fluidregulierungssystemkomponenten; oder
Analysieren von Daten des Überwachens eines oder mehrerer Fluidregulierungssystemkomponenten, um zu bestimmen, welche Daten behalten werden sollen.

5. Fluidregulierungssystem gemäß Anspruch 1, wobei das Fluidregulierungssystem (100; 300) Safety Integrated Level 3-konform ist; oder
wobei das Fluidregulierungssystem (100; 300) weiter eine Überbrückungsvorrichtung (312) umfasst, die ausgelegt ist, um das Steuersignal zu unterbrechen, während Energie zu der Steuerung (311) zugeführt wird.

6. Verfahren, das durch ein Fluidregulierungssystem (100) ausgeführt wird, **gekennzeichnet durch** die Tatsache, dass das Verfahren umfasst:
Empfangen (210; 410) eines Befehlssignals (130; 340) in einem Signalbereich, wobei der Signalbereich Signale von einem Tiefpegel-Signal zu einem Hochpegel-Signal umfasst, und wobei das Tiefpegel-Signal einem Signal zum Schließen eines Ventils (120; 330) entspricht;
Einstellen eines Kontrollsignals für einen elektrisch-zu-Druckwandler (112; 313), zumindest teilweise basierend auf dem empfangenen Befehlssignal (130; 340); und
Überwachen (250; 430) einer oder mehrerer Komponenten des Fluidregulierungssystems, wenn das Tiefpegel-Signal empfangen wird, sodass eine oder mehrere der Systemkomponenten überwacht werden (430) während des Schließens des Ventils (120; 330);
wobei das Fluidregulierungssystem (100; 300) eine Ausfallwahrscheinlichkeit bei Bedarf von weniger als 10-3 hat.

7. Verfahren gemäß Anspruch 6, weiter umfassend Überwachen (250; 430) einer oder mehrerer der Komponenten, wenn das Befehlssignal (130; 340) empfangen wird.

8. Verfahren gemäß Anspruch 7, wobei Überwachen (250; 430) einer oder mehrerer der Komponenten Empfangen von Daten von Sensoren (315), die an die Komponenten des Fluidregulierungssystems gekoppelt sind, umfasst.

9. Verfahren gemäß Anspruch 8, weiter umfassend Analysieren (431) der empfangenen Daten, um zu bestimmen, welche Daten behalten werden sollen.

10. Verfahren gemäß Anspruch 9, wobei Analysieren (431) der Daten, um zu bestimmen, welche Daten behalten werden sollen, Bestimmen (432, 433, 435), ob Änderungen in den einen oder mehreren gemessenen Zuständen innerhalb einer zulässigen Toleranz liegen, umfasst.

11. Verfahren gemäß Anspruch 9, weiter umfassend Speichern (434, 437) der Daten, die behalten werden sollen.

12. Verfahren gemäß Anspruch 10, wobei die Daten beinhalten:
eine erste Ventilposition, die zu einer ersten Zeit gemessen wird;
eine zweite Ventilposition, die zu einer zweiten Zeit gemessen wird; und
Analysieren (431) der Daten umfasst:
Vergleichen (432, 433) der ersten Ventilposition mit der zweiten Ventilposition; und
Behalten (437) einer der ersten Messung oder der zweiten Messung, wenn die erste Ventilposition und die zweite Ventilposition innerhalb einer zulässigen Toleranz liegen.

13. Verfahren gemäß Anspruch 10, wobei die Daten beinhalten:
einen ersten Druck, der einem Aktuator zugeführt wird, und eine erste Ventilposition, die zu einer ersten Zeit gemessen wird;
einen zweiten Druck, der einem Aktuator zugeführt wird, und eine zweite Ventilposition, die zu einer zweiten Zeit gemessen wird; und
Analysieren (431) der Daten umfasst:
Vergleichen (432, 433) des ersten Drucks mit dem zweiten Druck;
Vergleichen (432; 435) der ersten Ventilposition mit der zweiten Ventilposition; und
Behalten (437) der ersten Messung und der zweiten Messung, wenn die erste Ventilposition und die zweite Ventilposition innerhalb einer zulässigen Toleranz liegen und der erste Druck und der zweite Druck nicht innerhalb einer zulässigen Toleranz liegen.

14. Verfahren gemäß Anspruch 6, weiter umfassend:
Schließen (240; 420) des Ventils (120; 330), wenn das Tiefpegel-Signal empfangen wird (210; 410); oder
Übermitteln einer Nachricht, die anzeigt, dass das Ventil (120; 330) geschlossen hat, wenn das Signal ein Tiefpegel-Signal beinhaltet; oder
Bestimmen (430) von Ventilkenngrößen.

15. Verfahren gemäß Anspruch 6, wobei Empfangen des Steuersignals (130; 340) das Empfangen des Steuersignals über eine einzelne Leitung umfasst.

16. Fluidregulierungssystem gemäß Anspruch 1, umfassend:
ein Ventil (330); und
einen Aktuator (320) ausgelegt, um ein Drucksignal zu empfangen und eine Position des Ventils (330) in Antwort darauf einzustellen;
wobei das Ventilpositioniersystem (320) weiter beinhaltet:
eine Überbrückungsvorrichtung (315), ausgelegt, um Steuersignale zu unterbrechen, während Energie zu der Steuerung (317) zugeführt wird; und
einen Schalter (314), ausgelegt, um das Drucksignal von dem elektrisch-zu-Druckwandler zu empfangen und das Drucksignal dem Aktuator zuzuführen;
wobei die Steuerung (311) des Ventilpositioniersystems (310) weiter ausgelegt ist, um ein Signal zum Schließen des Ventils zu erzeugen, wenn ein Tiefpegel-Steuersignal empfangen wird; und
wobei das Fluidregulierungssystem (300) eine Ausfallwahrscheinlichkeit bei Bedarf von 10-3 oder weniger aufweist.

## Revendications

1. Système de régulation de fluide (100 ; 300) comprenant :
un système de positionnement de vanne ou valve (110 ; 310) comprenant :
un convertisseur d'un signal électrique en pression (112 ; 313) ; et
un contrôleur (111 ; 311)
**caractérisé en ce que** le contrôleur (111 ; 311) est adapté à :
contrôler le convertisseur d'un signal électrique en pression (112 ; 313) en réponse à un signal de commande (130 ; 340) dans une gamme de signaux,
dans lequel la gamme de signaux comporte des signaux de commande allant d'un signal faible à un signal fort et dans lequel le signal faible correspond à un signal de fermeture de vanne (120 ; 330) ;
ajuster un signal de contrôle sur le convertisseur d'un signal électrique en pression (112 ; 313) sur la base d'au moins en partie sur des signaux de commande (130 ; 340) reçus ; et
surveiller un ou plusieurs composants du système de régulation de fluide pendant que le signal de commande faible est reçu ;
dans lequel le système de régulation de fluide (100 ; 300) présente une probabilité de panne à la demande de 10-3 ou moins.

2. Système de régulation de fluide selon la revendication 1, **caractérisé en ce que** les signaux de commande (130 ;340) comportent des signaux de courant.

3. Système de régulation de fluide selon la revendication 2, **caractérisé en ce que** la gamme de signaux est approximativement de 4 à 20 mA.

4. Système de régulation de fluide selon la revendication 1, **caractérisé en ce que** le contrôleur (111 ; 311) est adapté à :
déterminer les caractéristiques de vanne ; ou
recevoir des signaux de commande (130 ; 340) sur un fil unique ; ou
générer un signal de contrôle pour fermer une vanne (120) si le signal de commande faible est reçu ; ou
stocker au moins une partie des données reçues tout en surveillant un ou plusieurs composants du système de régulation de fluide ; ou
analyser des données issues de la surveillance d'un ou de plusieurs composants de système de régulation de fluide pour déterminer quelles données garder.

5. Système de régulation de fluide selon la revendication 1, **caractérisé en ce que** le système de régulation de fluide (100 ; 300) est conforme à la norme « Safety Integrated Level 3 » ; ou
**en ce que** le système de régulation de fluide (100 ; 300) comporte de plus un dispositif prioritaire de sécurité (312) adapté à interrompre le signal de contrôle tout en fournissant de l'énergie au contrôleur (311).

6. Procédé exécuté par un système de régulation de fluide (100) **caractérisé par le fait que** le procédé comporte :
la réception (210 ; 410) d'un signal de commande (130 ; 340) dans une gamme de signaux telle que la gamme de signaux comporte des signaux allant d'un signal faible à un signal fort et telle que le signal faible correspond à un signal de fermeture de vanne (120 ; 330) ;
l'ajustement d'un signal de contrôle pour un convertisseur d'un signal électrique en pression (112 ; 313) au moins partiellement basé sur le signal de commande reçu (13 ; 340) ; et
la surveillance (250 ; 430) d'un ou de plusieurs composants du système de régulation de fluide si le signal faible est reçu de sorte que un ou plusieurs composants du système sont surveillés (430) pendant la fermeture de la vanne (120 ; 330) ;
dans lequel le système de régulation de fluide (100 ; 300) présente une probabilité de panne à la demande de 10-3 ou moins.

7. Procédé selon la revendication 6 **caractérisé par le fait qu'**il comporte de plus la surveillance (250 ; 430) d'un ou de plusieurs composants quand on reçoit le signal de commande (130 ; 340).

8. Procédé selon la revendication 7, **caractérisé en ce que** la surveillance (250 ; 430) d'un ou de plusieurs composants comporte la réception de données de capteurs (315) couplés à des composants du système de régulation de fluide.

9. Procédé selon la revendication 8, **caractérisé en ce qu'**il comporte de plus une analyse (431) des données reçues pour déterminer quelles données garder.

10. Procédé selon la revendication 9 **caractérisé en ce que** l'analyse (431) des données pour déterminer quelles données garder comporte la détermination (432, 433, 435) si des variations d'un ou de plusieurs états se trouvent dans une tolérance admissible.

11. Procédé selon la revendication 9, comportant de plus le stockage (434, 437) des données à garder.

12. Procédé selon la revendication 10, dans lequel les données incluent ;
une première position de vanne mesurée à un premier instant ;
une seconde position de vanne mesurée à un second instant ;
l'analyse (431) des données comporte :
la comparaison (432, 433) la première position de vanne à la seconde position de vanne ; et
la garde (437) de l'une de la première ou de la seconde mesure, si la première position de vanne et la seconde position de vanne se trouvent dans une tolérance admissible.

13. Procédé selon la revendication 10, dans lequel les données incluent :
une première pression fournie à un actionneur et une première position de vanne à un premier instant ;
une seconde pression fournie à un actionneur et une seconde position de vanne à un second instant ; et
l'analyse (431) des données comporte :
la comparaison (432, 433) de la première pression à la seconde pression ;
la comparaison (432, 435) de la première position de vanne à la seconde position de vanne ; et
la garde (437) de la première et de la seconde mesures si la première position de vanne et la seconde position de vanne se trouvent dans une tolérance admissible et si la première pression et la seconde pression ne se trouvent pas dans une tolérance admissible.

14. Procédé selon la revendication 6, comportant de plus
la fermeture (240 ; 420) de la vanne (120 ; 330) si le signal faible est reçu (210 ; 410) ; ou
la transmission d'un message indiquant que la vanne a été fermé quand le signal inclut un signal faible ; ou
la détermination (430) de caractéristiques de vanne.

15. Procédé selon la revendication 6, dans lequel la réception du signal de commande (130 ; 43) comporte la réception du signal de commande sur un fil unique.

16. Système de régulation de fluide selon la revendication 1, comprenant :
une vanne (330) ; et
un actionneur (320) adapté à recevoir un signal de pression et à ajuster une position de vanne (330) en réponse ;
le système de positionnement de vanne (310) comprenant de plus :
un dispositif prioritaire de sécurité (315) adapté à interrompre les signaux de contrôle tout en poursuivant l'alimentation en énergie du contrôleur (317) ; et
un relais (314) adapté à recevoir le signal de pression provenant d'un convertisseur de signal électrique en pression et à fournir le signal de pression à l'actionneur ;
dans lequel le contrôleur (311) du système de positionne-ment de vanne (310) est adapté de plus à générer un signal de fermeture de vanne si un signal de commande faible est reçu ; et
dans lequel le système de régulation de fluide (300) présente une probabilité de panne à la demande de 10-3 ou moins.
